# EUROPÄISCHE PATENTSCHRIFT

(11) **EP 3 595 882 B1**
(45) Veröffentlichungstag und Bekanntmachung des Hinweises auf die Patenterteilung: **02.06.2021**
(21) Anmeldenummer: 18702163.9
(22) Anmeldetag: 22.01.2018
(51) Int. Cl.: B29D 30/66

(54) **SPIKE-SETZPISTOLE**
SPIKE SETTING GUN
PISTOLET DE POSE DE CRAMPONS

(30) Priorität: 17.03.2017 DE 102017204484; 25.04.2017 DE 102017206903
(43) Veröffentlichungstag der Anmeldung: 22.01.2020
(73) Patentinhaber: Continental Reifen Deutschland GmbH, 30165 Hannover (DE)
(72) Erfinder: KOCH, Tim, 30900 Wedemark (DE); LUDWIG, Jens, 30519 Hannover (DE); DIETRICH, Holger, 30938 Burgwedel (DE); SCHLITTENHARD, Jan, 30900 Wedemark (DE); HARISCH, Ralph, 34308 Bad Emstal (DE)
(74) Vertreter: Continental Corporation
(86) Internationale Anmeldenummer: PCT/EP2018/051369
(87) Internationale Veröffentlichungsnummer: WO 2018/166678

(56) Entgegenhaltungen:
- DE-A1-102009 044 830
- SU-A1- 768 654
- US-A- 3 387 352
- US-A- 3 494 015
- US-A- 3 507 031

## Beschreibung

Die Erfindung betrifft eine Spike-Setzpistole mit einem Pistolengehäuse und einem um eine zentrale Hauptachse angeordneten Pistolenkopf, in welchen eine Setzeinrichtung mit einem entlang einer Hauptachse zwischen einer Ausgangsposition und einer Setzposition verfahrbaren Setzbolzen hineinragt, wobei der Pistolenkopf um die Hauptachse angeordnete und in der Ausgangsposition mittels zumindest eines elastischen Spannelementes zueinander gedrückte Spreizfinger mit Spreizelementen zum Aufweiten eines Spikeloches aufweist, wobei die Spreizfinger mittels einer im Pistolenkopf befindlichen Spreizeinrichtung gleichzeitig auseinanderdrückbar sind.

Eine derartige Spike-Setzpistole ist beispielsweise aus der Patentschrift US 3,348,291 bekannt. Als Spreizeinrichtung ist eine unmittelbar unterhalb des Setzbolzens angeordnete und den Setzbolzen umschließende Hülse vorgesehen. Beim Setzvorgang wird zuerst die Hülse entlang der Hauptachse der Spike-Setzpistole zwischen die Spreizfinger bewegt, wodurch die Spreizfinger das Spikeloch aufweiten. Anschließend wird ein Spike mittels des Setzbolzens zwischen den auseinanderbewegten Spreizfinger in das Spikeloch gesetzt. Beim Auseinanderschieben der Spreizfinger wird Kraft von der Hülse auf die Spreizfinger übertragen. Die Berührungsfläche zwischen der Hülse und den Spreizfingern ist dabei sehr klein, sodass an der Hülse und der Innenseite der Spreizfinger bereits nach kurzer Betriebszeit Verschleißerscheinungen auftreten. Die Lebensdauer der Hülse und der Spreizfinger ist daher gering, sodass die Betriebskosten und der Wartungsaufwand dieser Spike-Setzpistole entsprechend hoch sind.

Die Patentschrift US 3,494,015 offenbart eine Spike-Setzpistole, in deren Gehäuse parallel zur Hauptachse orientierte Greiffinger angeordnet sind. Zum Setzen eines Spikes wird ein Spike zwischen diese Greiffinger gespannt. Spreizfinger werden durch die Greiffinger auseinandergefahren und öffnen derart das Spikeloch. Auch bei dieser Spike-Setzpistole treten bereits nach kurzer Zeit an der von den Greiffingern gebildeten Spreizeinrichtung Verschleißerscheinungen auf.

Der Erfindung liegt daher die Aufgabe zugrunde, eine Spike-Setzpistole der eingangs genannten Art mit einer verschleißfesten und lange haltbaren Spreizeinrichtung zur Verfügung zu stellen.

Die gestellte Aufgabe wird erfindungsgemäß dadurch gelöst, dass die Spreizeinrichtung frei drehbar gelagerten Rollen aufweist, wobei pro Spreizfinger zumindest eine Rolle vorgesehen ist und sämtliche Rollen zum Auseinanderbewegen der Spreizfinger entlang von Steuerkurven an den Innenwänden der Spreizfinger abrollbar sind.

Bei einer erfindungsgemäßen Spike-Setzpistole wird die zum Auseinanderbewegen der Spreizfinger erforderliche Kraft mittels frei drehbarer, entlang der Innenwände der Spreizfinger abrollbarer Rollen übertragen. Die Rollen bewegen sich reibungsarm entlang der Spreizfinger, sodass auch bei intensivem Betrieb der Spike-Setzpistole kaum Abnutzungserscheinungen an den Innenwänden der Spreizfinger und den Rollen auftreten. Insbesondere lassen sich mit der erfindungsgemäßen Spike-Setzpistole auch Spikes aus unterschiedlichen, ggf. auch weicheren bzw. weniger harten, Materialien in den Laufstreifen vor Beschädigungen geschützt einsetzen, da die erforderliche Kraft zum Auseinanderbewegen der Spreizfinger über die Rollen und daher nicht über den Spike übertragen wird.

Gemäß einer bevorzugten Ausführungsvariante sind die Rollen am Setzbolzen angeordnet. Bei dieser konstruktiv einfachen Ausgestaltung werden der Setzbolzen und die Rollen gleichzeitig verfahren, wobei diese mechanische Kopplung eine besonders sichere Steuerung des Setzvorganges ermöglicht. Bei einer alternativen Ausführungsvariante sind die Rollen mittels eines separaten Antriebes bewegbar.

Für eine zweckmäßige Betätigung der Spreizeinrichtung ist es von Vorteil, wenn die Spreizfinger am Pistolengehäuse oder an einem mit dem Pistolengehäuse verbundenen Teil schwenkbar angeordnet bzw. angelenkt sind. Sind die Anlenkstellen der Spreizfinger, insbesondere quer zur Hauptachse, am bzw. gegenüber dem Pistolengehäuse verschiebbar und in der jeweiligen Lage fixierbar, ist es vorteilhafter Weise möglich, bei Bedarf die gegenseitige Lage der Spreizfinger derart anzupassen, dass sie eine auf der Hauptachse der Spikepistole liegende Spitze bilden, was einen präzisen Eintauchvorgang der Spreizelemente in das Spikeloch ermöglicht und daher für den Setzvorgang von Vorteil ist.

Gemäß einer bevorzugten Ausführungsvariante weist jede Steuerkurve einen ersten und einen zweiten Steuerabschnitt auf, wobei die Rollen beim Verfahren des Setzbolzens in Richtung Setzposition zuerst am ersten Steuerabschnitt abrollen und sich die Spreizfinger und deren Spreizelemente beim Abrollen der Rollen entlang der ersten Steuerabschnitte um ein größeres Ausmaß voneinander wegbewegen als beim Abrollen entlang der zweiten Steuerabschnitte. Das Aufweiten des Spikeloches erfolgt daher auf eine für das Gummimaterial im Laufstreifen schonende Weise.

Gemäß einer weiteren bevorzugten Ausführungsvariante verlaufen die Steuerabschnitte der Steuerkurven im Querschnitt jeweils gerade oder leicht gebogen. Die Übergänge zwischen den Steuerabschnitten der Steuerkurven sind gemäß einer weiteren bevorzugten Ausführung der Erfindung im Querschnitt verrundet.

Gemäß einer bevorzugten Ausführungsvariante ist die Spreizeinrichtung von einer Rolle pro Spreizfinger gebildet.

Für eine gleichmäßige Aufweitung des Spikeloches ist es von Vorteil, wenn die Spreizeinrichtung drei bis fünf, insbesondere vier, Spreizfinger aufweist.

Das zumindest eine elastische Spannelement, welches die Spreizfinger zueinander drückt, ist vorzugsweise ein Gummiring, eine Spiralfeder oder eine Schenkelfeder. Bevorzugter Weise ist das elastische Spannelement bzw. sind die elastischen Spannelemente in einer bzw. mehreren an der Außenseite der Spreizfinger ausgebildeten umlaufenden Nut(en) positioniert.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen vereinfachten schematischen Querschnitt durch einen Pistolenkopf einer Spike-Setzpistole gemäß einer Ausführungsvariante der Erfindung und
Fig. 2a bis Fig. 2e Prinzipskizzen des Pistolenkopfes aus Fig. 1 in aufeinanderfolgenden Stadien während des Setzens eines Spikes.

In der nachfolgenden Beschreibung verwendete Begriffe wie oben, unten und dergleichen beziehen sich jeweils auf die Lage der einzelnen Bauteile der Spike-Setzpistole wie sie in den Figuren gezeigt ist.

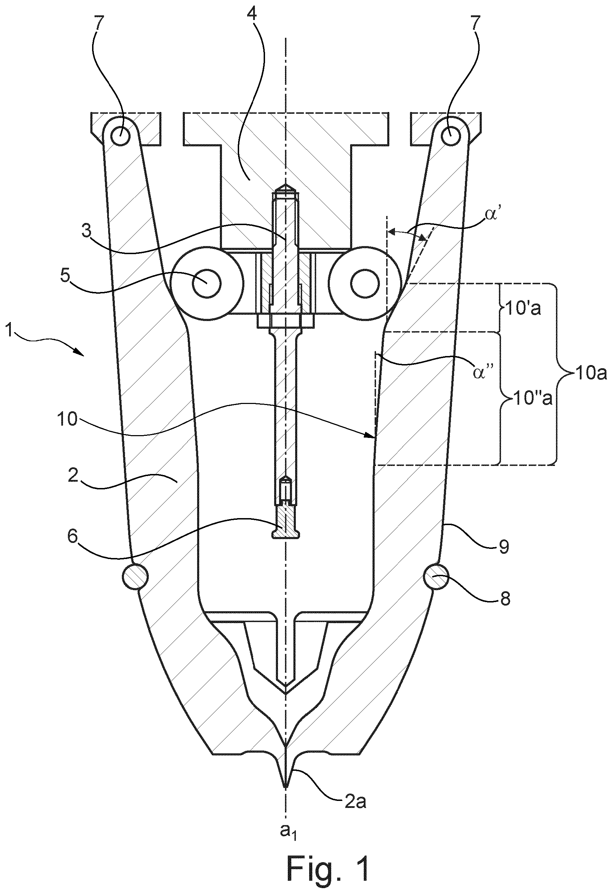

In Fig. 1 ist von einer Spike-Setzpistole ein Querschnitt durch einen Pistolenkopf 1 gezeigt, welcher an einem in Fig. 1 nicht gezeigten Pistolengehäuse angeordnet ist. Die in Setzrichtung der Spikes verlaufende Hauptachse a₁ der Spike-Setzpistole ist mit einer gestrichelten Linie angedeutet. Mittels einer nicht dargestellten Zuführeinrichtung, insbesondere mittels eines horizontal verfahrbaren Schiebers bzw. "Spikeladers", werden der Spike-Setzpistole Spikes 6 einzeln zugeführt und in den Pistolenkopf 1 geladen. Vorzugsweise ist die Spike-Setzpistole an einem Positioniermechanismus angeordnet, mittels welchem sie gegenüber im Laufstreifen eines Fahrzeugluftreifens ausgebildeten Spikelöchern zentriert ausrichtbar ist. Die Zuführeinrichtung, der Positioniermechanismus und das Pistolengehäuse können in bekannter Weise ausgeführt sein.

Der Pistolenkopf 1 weist zumindest drei, vorzugsweise bis zu fünf, insbesondere gleichmäßig um die Hauptachse a₁ angeordnete Spreizfinger 2 auf. Beim gezeigten Ausführungsbeispiel sind vier Spreizfinger 2 vorgesehen, von welchen im gezeigten Querschnitt zwei zu sehen sind. Zwischen den Spreizfingern 2 ist ein entlang der Hauptachse a₁ ausgerichteter und bewegbarer Setzbolzen 3 angeordnet, welcher am Ende einer entlang der Hauptachse a₁ in den Pistolenkopf 1 hineinragenden Kolbenstange 4 eines Pneumatikzylinders positioniert ist. Am Setzbolzen 3 ist pro Spreizfinger 2 eine frei drehbar gelagerte Rolle 5 angeordnet, wobei sich sämtliche Rollen 5 bezogen auf die Hauptachse a₁ in übereinstimmenden axialen Positionen befinden.

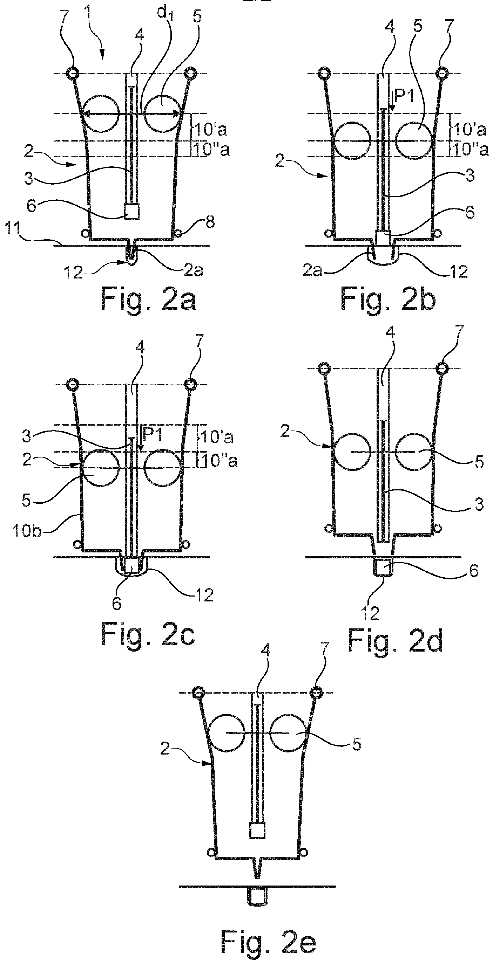

Die Kolbenstange 4 ist mit einem vorzugsweise in bekannter Weise ausgeführten Kolbenantrieb (in den Figuren nicht gezeigt) verbunden, mittels welchem die Kolbenstange 4 gemeinsam mit dem Setzbolzen 3 und sämtlichen Rollen 5 in Richtung der der Hauptachse a₁ bewegbar ist. Auf diese Weise kann der Setzbolzen 3 zwischen einer Ladeposition (Ausgangsposition, Fig. 2a) und einer Setzposition (Fig. 1, Fig. 2c) verfahren werden.

Die Spreizfinger 2 sind mit ihren oberen Enden an einem mit dem Pistolengehäuse verbundenen Teil (in Fig. 1 nicht bezeichnet) oder direkt am Pistolengehäuse an Schwenklagern 7 angeordnet, sodass die Spreizfinger 2 voneinander weg und zueinander bewegbar sind. Um sämtliche Spreizfinger 2 herum ist ein insbesondere im unteren Drittel des Pistolenkopfes 1 befindlicher elastischer Gummiring 8 gespannt, welcher in einer an den Außenwänden 9 der Spreizfinger 2 ausgebildeten, seichten und umlaufenden Nut positioniert ist und die Spreizfinger 2 zueinander drückt. An den unteren Enden der Spreizfinger 2 sind schmale und spitze Spreizelemente 2a ausgebildet, welche beim Setzvorgang in bekannter Weise das jeweilige Spikeloch aufweiten.

Die Spreizfinger 2 weisen einander zugewandte Innenwände 10 auf, welche bezogen auf die Hauptachse a₁, vorzugsweise in ihren mittleren Bereichen, als Steuerkurven 10a ausgebildet sind. Jede Steuerkurve 10a weist einen in den Figuren oberen ersten Steuerabschnitt 10'a und einen in den Figuren unteren zweiten Steuerabschnitt 10"a auf.

Der die Spikes 6 zuführende, horizontal in den Pistolenkopf 1 einfahrende, nicht dargestellte Schieber weist eine Führung bzw. Bohrung auf, durch die der jeweilige, über die Zuführung im Schieber eingeschossene Spike 6 bei in den Pistolenkopf 1 eingefahrenem Schieber vom Setzbolzen 3 bis zu den Spreizelementen 2a befördert wird.

In der in Fig. 1 und Fig. 2a gezeigten Ausgangsposition befindet sich das untere Ende des Setzbolzens 3 in einem Abstand von den Spreizelementen 2a, wobei auch ein bereits vom Setzbolzen 3 erfasster Spike 6 dargestellt ist. Durch die Spannkraft des Gummiringes 8 sind die Spreizelemente 2a zueinander gedrückt und bilden eine auf der Hauptachse a₁ liegende Spitze. Die Rollen 5 befinden sich am oberen Ende der ersten Steuerabschnitte 10'a, insbesondere liegen die Mittelpunkte der Rollen 5 auf der Höhe der oberen Enden der ersten Steuerabschnitte 10'a. In der Ausgangsposition des Setzbolzens 3 können die Rollen 5, wie in Fig. 2a gezeigt, die ersten Steuerabschnitte 10'a kontaktieren unter einem Abstand zu diesen positioniert sein.

Die ersten Steuerabschnitte 10'a und die zweiten Steuerabschnitte 10"a verlaufen bei bevorzugten Ausführungen der Erfindung im Querschnitt im Wesentlichen gerade oder leicht bogenförmig. Zumindest die ersten Steuerabschnitte 10'a sind derart gegenüber der Hauptachse a₁ geneigt, dass sich ihr gegenseitiger Abstand in Richtung zu den Spreizelementen 2a verringert. Die ersten Steuerabschnitte 10'a verlaufen in der Ausgangsposition und im Querschnitt betrachtet zur Hauptachse a₁ unter einem Winkel α', welcher vorzugsweise im Bereich von 1° bis 45° gewählt wird. Die zweiten Steuerabschnitte 10"a verlaufen beim gezeigten Ausführungsbeispiel in der Ausgangsposition und im Querschnitt betrachtet zur Hauptachse a₁ unter einem Winkel α", welcher kleiner ist als der Winkel α' und vorzugsweise bis zu 5° beträgt, insbesondere sogar kleiner ist als 1°. Der jeweilige Übergang zwischen den Steuerabschnitten 10'a und 10"a ist im Querschnitt verrundet.

In Fig. 2a bis Fig. 2e ist neben den schematischen Querschnitten durch den Pistolenkopf 1 ferner ein Abschnitt der Außenkontur eines Laufstreifens 11 angedeutet. Der Laufstreifen 11 ist insbesondere in bekannter Weise mit Spikelöchern versehen, wobei in Fig. 2a bis Fig. 2e exemplarisch ein einziges Spikeloch 12 gezeigt ist.

Vor dem Einsetzen eines Spikes 6 in das Spikeloch 12 des Laufstreifens 11 wird die Spike-Setzpistole senkrecht zum Spike loch 12 verfahren, um die nach wie vor zueinander gedrückten Spreizelemente 2a in das Spikeloch 12 hineinzufahren (Fig. 2a). Wie in Fig. 2b und Fig. 2c durch den Pfeil P₁ angedeutet ist, wird nachfolgend die Kolbenstange 4 mit dem Setzbolzen 3 und den Rollen 5 in Richtung des Spikeloches 12 verfahren. Dabei rollen die Rollen 5 zunächst über die ersten Steuerabschnitte 10'a, wodurch die Spreizfinger 2 um die Schwenklager 7 auseinanderbewegt werden und die Spreizelemente 2a das Spikeloch 12 aufweiten. Sobald die Rollen 5 den Übergang zwischen den ersten Steuerabschnitten 10'a und den zweiten Steuerabschnitten 10"a erreichen, sind die Spreizfinger 2 derart weit auseinanderbewegt, dass die zweiten Steuerabschnitte 10"a im Wesentlichen parallel zur Hauptachse a₁ ausgerichtet sind (Fig. 2b). Der vom Setzbolzen 3 erfasste Spike 6 befindet sich dabei noch knapp oberhalb der Laufstreifenperipherie. Die weiter Richtung Spikeloch 12 bewegten Rollen 5 rollen entlang den zweiten Steuerabschnitten 10"a, wobei der vom Setzbolzen 3 erfasste Spike 6 im Spikeloch 12 positioniert ist (Fig. 2c).

Wie in Fig. 2d angedeutet, wird nachfolgend die Spike-Setzpistole angehoben, sodass die nach wie vor um die Schwenklager 7 nach außen geschwenkten Spreizfinger 2 aus dem Spikeloch 12 gehoben werden, wodurch sich das Gummimaterial um das Spikeloch 12 elastisch zurückstellt und derart den eingesetzten Spike 6 festhält. Im Anschluss wird der Setzbolzen 3 mitsamt den Rollen 5 wieder zurück in die Ausgangsposition (Fig. 2a) bewegt, wobei die Spreizfinger 2 vom Gummiring 8 zueinander bewegt werden. Nachfolgend wird die Hauptachse a₁ der Spike-Setzpistole auf das nächste Spikeloch des Laufstreifens 11 ausgerichtet und in dieses, nach erneutem Laden der Spike-Setzpistole, auf die beschriebene Weise der nächste Spike eingesetzt. Der Vorgang wird solange wiederholt bis sämtliche Spikelöcher des Laufstreifens mit Spikes versehen sind. Zur schnelleren Bespikung können mehrere Spikepistolen gleichzeitig den beschriebenen Vorgang durchführen.

Die Erfindung ist nicht auf das beschriebene Ausführungsbeispiel beschränkt. Insbesondere kann der Setzbolzen 3 in Form eines pneumatisch angetriebenen Greiffingers oder einer pneumatisch angetriebenen Hülse ausgeführt sein. Bei einer weiteren Ausführungsvariante sind die Rollen 5 mit einem separaten Antrieb verfahrbar. Anstelle der Schwenklager 7 können andere Lagertypen, insbesondere Linearlager, verwendet werden. Dabei können die Spreizfinger 2 mit ihren am Pistolengehäuse befindlichen Anlenkstellen senkrecht zur Hauptachse a₁ verschieb- und fixierbar sein, beispielsweise entlang einer Schiene, sodass die gegenseitige Lage der Spreizfinger 2 bei Bedarf derart aufeinander abgestimmt werden kann, dass die Spreizfinger 2 die bereits erwähnte auf der Hauptachse a₁ liegende Spitze bilden können. Dadurch ist es auch möglich, Spikes mit sehr unterschiedlichen Geometrien mit derselben Spike-Setzpistole in Laufstreifen zu setzen. Ein andernfalls in diesem Zusammenhang erforderliches Umrüsten der Spike-Setzpistole entfällt daher. Die Funktion des Gummiringes 8 kann beispielsweise von einer Spiralfeder, einer Schenkelfeder oder einem gesonderten Mechanismus übernommen werden, wobei mehrere Spannelemente vorgesehen sein können. Die Spreizfinger 2 können mehrteilig ausgeführt sein, wobei insbesondere jene Teile der Spreizfinger 2, welche die Steuerabschnitte 10'a, 10"a aufweisen, vorzugsweise aus besonders verschleißresistenten Materialien bestehen.

Bei sämtlichen Ausführungsvarianten ist der Verlauf der Steuerkurve derart an die jeweilige Geometrie der zu setzenden Spikes, insbesondere an die Geometrie des jeweiligen Spikefußes, angepasst, dass sich die Spreizfinger für ein entsprechendes Aufweiten des Spikeloches im erforderlichen Ausmaß auseinanderbewegen. Zum Setzen von Spikes mit asymmetrischen Spikefüßen werden vorzugsweise Spreizfinger mit unterschiedlichen, jeweils entsprechend an die asymmetrische Geometrie des Spikefußes angepassten Steuerkurven verwendet.

### Bezugszeichenliste

- 1 ......................: Pistolenkopf
- 2 ......................: Spreizfinger
- 2a ....................: Spreizelement
- 3 ......................: Setzbolzen
- 4 ......................: Kolbenstange
- 5 ......................: Rolle
- 6 ......................: Spike
- 7......................: Schwenklager
- 8......................: Gummiring
- 9......................: Außenwand
- 10....................: Innenwand
- 10a ..................: Steuerkurve
- 10'a .................: erster Steuerabschnitt
- 10"a................: zweiter Steuerabschnitt
- 11....................: Laufstreifen
- 12....................: Spikeloch
- a₁ .....................: Hauptachse
- d₁.....................: Innendurchmesser
- α, α'.................: Winkel

## Patentansprüche

1. Spike-Setzpistole mit einem Pistolengehäuse und einem um eine zentrale Hauptachse (a₁) angeordneten Pistolenkopf (1), in welchen eine Setzeinrichtung (4) mit einem entlang der Hauptachse (a₁) zwischen einer Ausgangsposition und einer Setzposition verfahrbaren Setzbolzen (3) hineinragt, wobei der Pistolenkopf (1) um die Hauptachse (a₁) angeordnete und in der Ausgangsposition mittels zumindest eines elastischen Spannelementes (8) zueinander gedrückte Spreizfinger (2) mit Spreizelementen (2a) zum Aufweiten eines Spikeloches (12) aufweist, wobei die Spreizfinger (2) mittels einer im Pistolenkopf (1) befindlichen Spreizeinrichtung (5) gleichzeitig auseinanderdrückbar sind,
**dadurch gekennzeichnet,**
**dass** die Spreizeinrichtung (5) frei drehbar gelagerte Rollen (5) aufweist, wobei pro Spreizfinger (2) zumindest eine Rolle (5) vorgesehen ist und sämtliche Rollen (5) zum Auseinanderbewegen der Spreizfinger (2) entlang von Steuerkurven (10a) an den Innenwänden (10) der Spreizfinger (2) abrollbar sind.

2. Spike-Setzpistole nach Anspruch 1, **dadurch gekennzeichnet, dass** die Rollen (5) am Setzbolzen (3) angeordnet sind.

3. Spike-Setzpistole nach Anspruch 1, **dadurch gekennzeichnet, dass** die Rollen (5) mittels eines separaten Antriebes bewegbar sind.

4. Spike-Setzpistole nach einem der Ansprüche 1 bis 3, **dadurch gekennzeichnet, dass** die Spreizfinger (2) am Pistolengehäuse oder an einem mit dem Pistolengehäuse verbundenen Teil schwenkbar angeordnet bzw. angelenkt sind.

5. Spike-Setzpistole nach einem der Ansprüche 1 bis 4, **dadurch gekennzeichnet, dass** die Anlenkstellen der Spreizfinger (2) gegenüber dem Pistolengehäuse, insbesondere senkrecht zur Hauptachse (a₁), verschiebbar und in der jeweiligen Lage fixierbar sind.

6. Spike-Setzpistole nach einem der Ansprüche 1 bis 4, **dadurch gekennzeichnet, dass** jede Steuerkurve (10a) einen ersten und einen zweiten Steuerabschnitt (10'a, 10"a) aufweist, wobei die Rollen (5) beim Verfahren des Setzbolzens (3) in Richtung Setzposition zuerst am ersten Steuerabschnitt (10'a) abrollen und sich die Spreizfinger (2) und deren Spreizelemente (2a) beim Abrollen der Rollen (5) entlang der ersten Steuerabschnitte (10'a) um ein größeres Ausmaß voneinander wegbewegen als beim Abrollen entlang der zweiten Steuerabschnitte (10"a).

7. Spike-Setzpistole nach Anspruch 6, **dadurch gekennzeichnet, dass** die Steuerabschnitte (10'a, 10"a) der Steuerkurven (10a) im Querschnitt jeweils gerade oder leicht gebogen verlaufen.

8. Spike-Setzpistole nach Anspruch 6 oder 7, **dadurch gekennzeichnet, dass** die Übergänge zwischen den Steuerabschnitten (10'a, 10"a) der Steuerkurven (10a) im Querschnitt verrundet sind.

9. Spike-Setzpistole nach einem der Ansprüche 1 bis 8, **dadurch gekennzeichnet, dass** die Spreizeinrichtung (5) eine einzige Rolle (5) pro Spreizfinger (2) aufweist.

10. Spike-Setzpistole nach einem der Ansprüche 1 bis 9, **dadurch gekennzeichnet, dass** die Spreizeinrichtung (5) drei bis fünf, insbesondere vier, Spreizfinger (2) aufweist.

11. Spike-Setzpistole nach einem der Ansprüche 1 bis 10, **dadurch gekennzeichnet, dass** das elastische Spannelement (8), welches die Spreizfingern (2) zueinander drückt, ein Gummiring (8), eine Spiralfeder oder eine Schenkelfeder ist.

12. Spike-Setzpistole nach einem der Ansprüche 1 bis 11, **dadurch gekennzeichnet, dass** das elastische Spannelement (8) bzw. die elastischen Spannelemente, in einer bzw. mehreren an der Außenseite (9) der Spreizfinger (2) ausgebildeten umlaufenden Nut(en) positioniert ist bzw. sind.

## Claims

1. Spike setting gun having a gun housing and a gun head (1), which is arranged about a central main axis (a₁) and into which there protrudes a setting device (4) having a setting bolt (3), which can travel along the main axis (a₁) between an initial position and a setting position, wherein the gun head (1) has spreading fingers (2), which are arranged about the main axis (a₁) and in the initial position are pressed towards one another by means of at least one elastic clamping element (8) and have spreading elements (2a) for expanding a spike hole (12), wherein the spreading fingers (2) can be simultaneously pushed apart from one another by means of a spreading device (5) located in the pistol head (1),
**characterized**
**in that** the spreading device (5) has freely rotatably mounted rollers (5), wherein at least one roller (5) is provided per spreading finger (2) and all of the rollers (5) can roll along control cams (10a) on the inner walls (10) of the spreading fingers (2) in order to move the spreading fingers (2) apart.

2. Spike setting gun according to Claim 1, **characterized in that** the rollers (5) are arranged on the setting bolt (3).

3. Spike setting gun according to Claim 1, **characterized in that** the rollers (5) can be moved by means of a separate drive.

4. Spike setting gun according to one of Claims 1 to 3,
**characterized in that** the spreading fingers (2) are pivotably arranged or articulated on the gun housing or on a part connected to the gun housing.

5. Spike setting gun according to one of Claims 1 to 4,
**characterized in that** the points of articulation of the spreading fingers (2) can be displaced with respect to the gun housing, in particular perpendicularly to the main axis (a₁), and can be fixed in the respective position.

6. Spike setting gun according to one of Claims 1 to 4,
**characterized in that** each control cam (10a) has a first and a second control portion (10'a, 10"a), wherein, when the setting bolt (3) travels in the direction of the setting position, the rollers (5) roll at first on the first control portion (10'a) and the spreading fingers (2) and their spreading elements (2a) move away from one another by a greater extent when the rollers (5) are rolling along the first control portions (10'a) than when they are rolling along the second control portions (10"a).

7. Spike setting gun according to Claim 6, **characterized in that** the control portions (10'a, 10"a) of the control cams (10a) respectively run in a straight or slightly curved line in cross section.

8. Spike setting gun according to Claim 6 or 7,
**characterized in that** the transitions between the control portions (10'a, 10"a) of the control cams (10a) are rounded in cross section.

9. Spike setting gun according to one of Claims 1 to 8,
**characterized in that** the spreading device (5) has a single roller (5) per spreading finger (2).

10. Spike setting gun according to one of Claims 1 to 9,
**characterized in that** the spreading device (5) has three to five, in particular four, spreading fingers (2) .

11. Spike setting gun according to one of Claims 1 to 10,
**characterized in that** the elastic clamping element (8), which presses the spreading fingers (2) towards one another, is a rubber ring (8), a spiral spring or a leg spring.

12. Spike setting gun according to one of Claims 1 to 11,
**characterized in that** the elastic clamping element (8) or the elastic clamping elements is or are positioned in one or more peripheral groove(s) formed on the outer side (9) of the spreading fingers (2).

## Revendications

1. Pistolet de pose de crampons, comprenant un boîtier de pistolet et une tête de pistolet (1) disposée autour d'un axe principal central (a₁) et dans laquelle fait saillie un dispositif de pose (4) doté d'un boulon de pose (3) pouvant être déplacé le long de l'axe principal (a₁) entre une position de départ et une position de pose, dans lequel la tête de pistolet (1) présente des doigts d'écartement (2) dotés d'éléments d'écartement (2a) pour élargir un trou de crampon (12), disposés autour de l'axe principal (a₁) et, dans la position de départ, serrés les uns contre les autres au moyen d'au moins un élément de serrage élastique (8), les doigts d'écartement (2) pouvant être simultanément séparés les uns des autres au moyen d'un dispositif d'écartement (5) se trouvant dans la tête de pistolet (1),
**caractérisé en ce que** le dispositif d'écartement (5) présente des rouleaux montés en rotation libre, au moins un rouleau (5) étant prévu par doigt d'écartement (2), et tous les rouleaux (5) pouvant rouler le long de cames de commande (10a) sur les parois intérieures (10) des doigts d'écartement (2) pour séparer les doigts d'écartement (2) les uns des autres.

2. Pistolet de pose de crampons selon la revendication 1, **caractérisé en ce que** les rouleaux (5) sont disposés au niveau du boulon de pose (3).

3. Pistolet de pose de crampons selon la revendication 1, **caractérisé en ce que** les rouleaux (5) peuvent être déplacés au moyen d'un entraînement séparé.

4. Pistolet de pose de crampons selon l'une quelconque des revendications 1 à 3, **caractérisé en ce que** les doigts d'écartement (2) sont disposés pivotants ou sont articulés sur le boîtier de pistolet ou sur une partie reliée au boîtier de pistolet.

5. Pistolet de pose de crampons selon l'une quelconque des revendications 1 à 4, **caractérisé en ce que** les points d'articulation des doigts d'écartement (2) peuvent être déplacés par rapport au boîtier de pistolet en particulier perpendiculairement à l'axe principal (a₁), et peuvent être fixés dans la position respective.

6. Pistolet de pose de crampons selon l'une quelconque des revendications 1 à 4, **caractérisé en ce que** chaque came de commande (10a) présente une première et une deuxième partie de commande (10'a, 10"a), dans lequel, lors du déplacement du boulon de pose (3), les rouleaux (5) roulent en direction de la position de pose sur la première partie de commande (10'a), et les doigts d'écartement (2) et leurs éléments d'écartement (2a) s'éloignent les uns des autres lorsque les rouleaux (5) roulent le long des premières parties de commande (10'a) plus que lorsqu'ils roulent le long des deuxièmes parties de commande (10"a).

7. Pistolet de pose de crampons selon la revendication 6, **caractérisé en ce que** les parties de commande (10'a, 10"a) des cames de commande (10a) s'étendent respectivement de manière droite ou légèrement courbe en section transversale.

8. Pistolet de pose de crampons selon la revendication 6 ou 7, **caractérisé en ce que** les transitions entre les parties de commande (10'a, 10"a) des cames de commande (10a) sont à section transversale arrondie.

9. Pistolet de pose de crampons selon l'une quelconque des revendications 1 à 8, **caractérisé en ce que** le dispositif d'écartement (5) présente un seul rouleau (5) par doigt d'écartement (2).

10. Pistolet de pose de crampons selon l'une quelconque des revendications 1 à 9, **caractérisé en ce que** le dispositif d'écartement (5) présente de trois à cinq, en particulier quatre, doigts d'écartement (2).

11. Pistolet de pose de crampons selon l'une quelconque des revendications 1 à 10, **caractérisé en ce que** l'élément de serrage élastique (8), qui serre les doigts d'écartement (2) les uns contre les autres, est une bague en caoutchouc (8), un ressort en spirale ou un ressort à branches.

12. Pistolet de pose de crampons selon l'une quelconque des revendications 1 à 11, **caractérisé en ce que** l'élément de serrage élastique (8) ou les éléments de serrage élastiques est/sont positionné (s) dans une ou plusieurs rainures périphériques réalisées sur la face extérieure (9) des doigts d'écartement (2).
